Europäisches Patentamt

European Patent Office

Office européen des brevets

(11) Publication number: **0 452 520 A1**

# EUROPEAN PATENT APPLICATION

(21) Application number: **90107225.6**

(22) Date of filing: **17.04.90**

(51) Int. Cl.5: **A22B 7/00, F16B 45/00**

(43) Date of publication of application:
**23.10.91 Bulletin 91/43**

(84) Designated Contracting States:
**AT BE CH DE ES FR GB GR LI LU NL SE**

(71) Applicant: **Zoppello, Leonardo**
**Via del Cristo 104 B**
**I-35100 Padova(IT)**

(72) Inventor: **Zoppello, Leonardo**
**Via del Cristo 104 B**
**I-35100 Padova(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Articulated hook for handling and transporting meat.**

(57) The articulated hook for handling and transporting meat is constituted by a curved body (2) having a pointed end (2a) and by a slider (3, 8) for sliding along a C-shaped guide. The body (2) and the slider (3, 8) are provided with coupling zones (13) for coupling to the ends of a portion of flexible cable (5).

FIG.5

EP 0 452 520 A1

The present invention relates to an articulated hook for handling and transporting meat.

In the field of handling and transporting meat and butchery, stainless steel hooks are used which have, in their upper portion, a trolley or plate for sliding along a profiled element, commonly known as an "omega section" element. Such elements have a downwardly open "C"-shaped cross section with inwardly directed wings. After inserting the top of the hooks into the C-shaped guide, the pieces or meat suspended from the hooks can be pushed so that the plates are caused to slide along said guides.

During handling and transportation, the meat hanging on the hooks oscillates, and so the plates bearing on the inwardly directed wings of the omega section often cause deformation of the profiled element. This causes the plates and the hooks associated therewith to become scarcely slidable with respect to the profiled element and, in the course of time, excessive deformation may cause the exit of the plate or trolley from the profiled element constituting a guide.

In order to obviate this, systems for creating an articulation between the hook and the plate have been studied which allow freedom of oscillation of the hook in all directions with respect to the plate.

To this end, hooks have been provided which have a single hinge arranged proximate to the plate, but the problem was not solved completely in this manner. It was subsequently proposed to provide, along the stem of the hook, a double hinge -with cross-like axes, so as to allow oscillation of the hook with respect to the plate in two directions, thereby allowing a greater freedom of movement of the hook.

All these solutions, however, increase both production costs and the weight of the hook.

Furthermore, with the above-described double hinge arrangement, the plate or trolley fold downward, when not supported in the guide and require a manual operation for inserting it into the guide. This is extremely troublesome when a piece of meat of considerable size is being loaded manually. The resultant structurally complicated arrangement also creates zones where putrescible material could remain.

The technical aim of the present invention is to obviate the above described disadvantages, i.e. to provide an articulated hook which does not cause any deformation of the cross-sectionally omega-shaped guide and which can be easily inserted without requiring any additional manual operation.

Within this aim, an object of the present invention is to provide an articulated hook which does not have regions in which traces of putrescible material might remain.

A further object of the present invention is to achieve the above-cited aim and object with a simple structure which is relatively easy to manufacture and use, and which is safe in use and effective in operation as well as being advantageous from an economic standpoint.

This aim and these objects as well as other objects which will become apparent hereinafter are achieved by the present articulated hook for handling and transporting meat, comprising a body curved in the shape of a hook with a pointed end, and a slider member adapted for sliding along a substantially C-shaped guide, characterized in that said body and said slider member are each provided with means for coupling to the ends of at least one portion of flexible cable.

Further features and advantages of the invention will become apparent from the following detailed description of a preferred but not exclusive embodiment of a hook according to the invention, illustrated only by way of non-limitative example in the accompanying drawings, wherein:

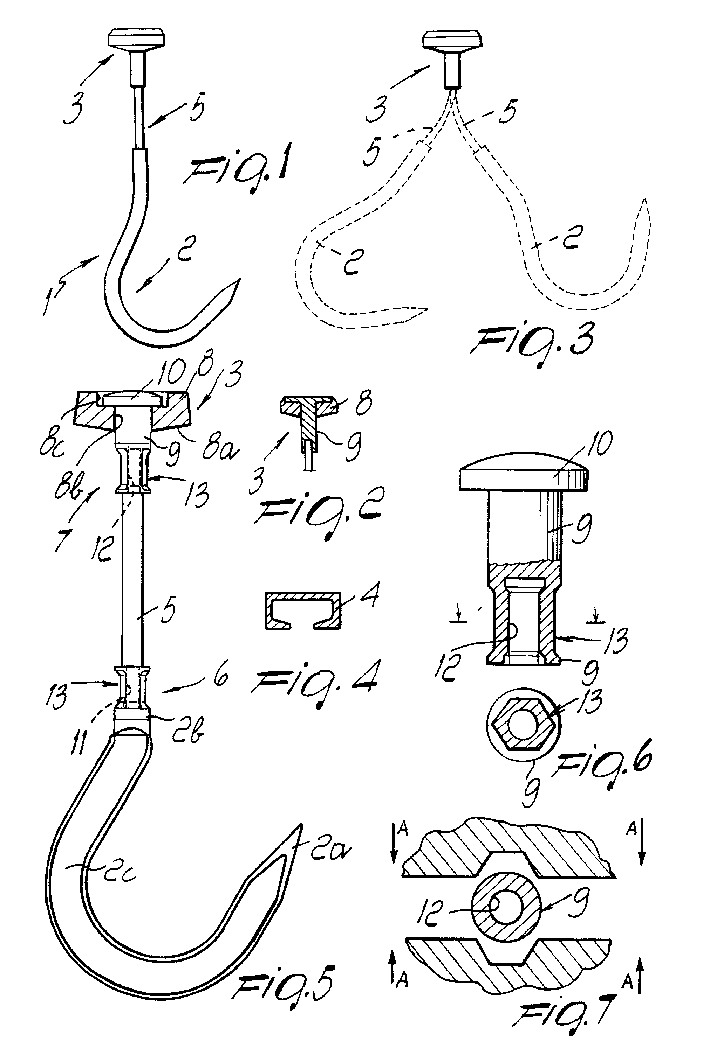

figure 1 is a side view of a hook according to the invention;

figure 2 is a sectional side view of the top portion of the hook;

figure 3 is a schematic side view of a hook, illustrating two of the possible positions it may assume;

figure 4 is a sectional view of a guide known as an "omega-section guide";

figure 5 is an enlarged-scale side view of a preferred embodiment of the hook according to the invention;

figure 6 is an enlarged-scale detail view of the slider member; and,

figure 7 is a schematic view of the tool for coupling the flexible cable to the hook and the plate.

With particular reference to the above-described figures, the reference numeral 1 indicates the hook according to the invention, which is constituted by a body 2, curved in the shape of a hook. The body 2 is pointed at one end 2a, has a circular cross section at the other end 2b, and at an intermediate portion 2c thereof it can be laterally crimped to increase its strength.

The hook is furthermore constituted by a slider 3, adapted for sliding along a guide 4 having a substantially C-shaped cross-section, which is of the type known as an "omega guide". A portion of a cable-like element or braided cable 5 is fixed with its ends to the body 2 and to the slider 3 by coupling means 6 and 7.

The slider 3 is constituted by a horizontal plate 8 with a substantially spheroidal convex base 8a, which is expediently made of material having a low coefficient of friction, for example, material such as plastics commercially known as DELRIN.

The plate 8 is traversed by a hole 8b in which the stem 9 of a large rivet is inserted from above. The head 10 of said rivet 9 is inserted in an upper seat 8c of the plate 8.

The body 2, the cable 5 and the rivet 10 are advantageously made of metallic material such as stainless steel.

The coupling means 6 and 7 comprise crimped portions which are produced by inserting the ends of the cable 5 in corresponding axial blind holes formed respectively in the end 2b of the hook 2 and the stem 9 of the plate 8, and subsequently crimping the related parts or crimped portions 13. The crimping is advantageously obtained with tools of the kind illustrated in figure 7, actuated in the direction of the arrows A. Figure 7 also illustrates the original cross section of the rivet before crimping.

A covering sheath, made of material such as plastics, can be usefully arranged over the cable for hygienic purposes.

The steel flexible cable expediently has an appropriate cross section so as to be sufficiently elastic to allow oscillation of the hook and the meat suspended therefrom without damaging the omega guide, while being sufficiently rigid to allow the meat to be easily pushed onto the hook, without having to retain the hook-like part with one hand as currently occurs with commercially available hooks.

Besides this, the flexible cable allows, contrary to the hinges currently in use, a certain degree of torsional freedom.

It should be noted that the means for coupling the portion of flexible cable can alternatively be provided by means of spot-welds or with pressure couplings or with mechanical couplings such as screws, bolts, pivots, threaded joints or others; the flexible cable, instead of being made of stainless steel, may be made of another material, e.g., nylon.

It has thus been observed that the invention achieves the proposed aim and objects.

The invention thus conceived is susceptible to numerous modifications and variations, all of which are within the scope of the inventive concept.

All the details may furthermore be replaced with other technically equivalent ones.

In practice, the materials employed, as well as the shapes and dimensions, may be any according to the requirements without thereby abandoning the scope of the protection of the following claims.

Where technical features mentioned in any claims are followed by reference signs, those reference signs have been included for the sole purpose of increasing the intelligibility of the claims and accordingly such reference signs do not have any limiting effect on the scope of each element identified by way of example by such reference signs.

## Claims

1. Articulated hook for handling and transporting meat, comprising a body curved in the shape of a hook with a pointed end, and by a slider member adapted for sliding along a substantially C-shaped guide, characterized in that said body and said slider member are each provided with means for coupling to the ends of at least one portion of flexible cable.

2. Hook according to claim 1, characterized in that said cable is made of metallic material such as stainless steel.

3. Hook according to claim 1 or 2, characterized in that said body is made of metallic material such as stainless steel.

4. Hook according to claim 1, 2 or 3, characterized in that said slider is constituted by a horizontal plate with a substantially spheroidal convex base made of material having a low coefficient of friction.

5. Hook according to claim 1 or 4, characterized in that said slider is made of a material such as plastics known by the trade-name DELRIN.

6. Hook according to claims 1 and 4, characterized in that said plate is axially traversed by the stem of a large rivet made of metallic material such as stainless steel.

7. Hook according to claim 4, characterized in that said coupling means comprise a cable having ends inserted into corresponding blind holes provided at the non-pointed end of the hook and of the stem of the rivet, the related parts of said blind holes being crimped.

8. Hook according to claim 1 or 7, characterized in that said coupling means comprise spot-welds.

9. Hook according to claim 1, characterized in that a protective sheath made of a material such as plastics is arranged on said flexible cable.

Fig.1

Fig.3

Fig.2

Fig.4

Fig.5

Fig.6

Fig.7

European
Patent Office

EUROPEAN SEARCH
REPORT

Application Number

EP 90 10 7225

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | DE-C-8 085 11   (ZEDLER)<br>* the whole document * | 1,2,8,6,7 | A 22 B 7/00<br>F 16 B 45/00 |
| A | GB-A-1 257 220   (BLAIR PRODUCTS S.A.)<br>* the whole document * | 4 | |
| A | FR-A-1 381 558   (ATELIERS DE CONSTRUCTIONS MECANIQUES DE MAURECOURT)<br>* page 2, paragraph 10; figure 1 * | 1 | |
| A | GB-A-1 008 976   (PUSCH)<br>* page 1, lines 53 - 75 * | 4,5 | |
| A | US-A-3 820 195   (HUTZELL)<br>* abstract; figure 1 * | 9 | |
| A | US-A-2 652 589   (SPOONER) | | |

TECHNICAL FIELDS
SEARCHED (Int. Cl.5)

A 22 B
F 16 B
A 22 C
B 65 G

The present search report has been drawn up for all claims

| Place of search | Date of completion of search | Examiner |
|---|---|---|
| The Hague | 20 December 90 | VON ARX V.U. |